# EUROPEAN PATENT APPLICATION

(11) **EP 4 465 493 A1**
(43) Date of publication of application: **20.11.2024**
(21) Application number: 23887162.8
(22) Date of filing: 15.11.2023
(51) Int. Cl.: H02K 1/276

(54) **IRON CORE AND ROTOR**

(30) Priority: 04.04.2023 CN 202320727127 U
(71) Applicant: Jing-Jin Electric Technologies Co., Ltd, Beijing 100023 (CN)
(72) Inventor: LING, Xinliang, Chaoyang District, Beijing 100023 (CN); ZHOU, Dongsheng, Chaoyang District, Beijing 100023 (CN); LV, Ya, Chaoyang District, Beijing 100023 (CN); WANG, Mengqi, Chaoyang District, Beijing 100023 (CN); HAN, Lei, Chaoyang District, Beijing 100023 (CN)
(74) Representative: Schwarz & Partner Patentanwälte GmbH
(86) International application number: PCT/CN2023/131771
(87) International publication number: WO 2024/207744

(57) **Abstract**

An rotor core and a rotor are disclosed. The rotor core comprises rotor laminations (1) and magnets (2). The rotor laminations (1) are provided with magnet slots (11) and magnet-fixation holes (12), the magnet-fixation holes (12) are located at a side of the magnet slots (11), and the magnets (2) are located inside the magnet slots (11). The magnet-fixation holes (12) can be pushed and deformed toward the magnet slots (11) to press tightly and fix the magnets (2). By providing the magnet-fixation holes (12) at a side of the magnet slots (11), and pushing the rotor laminations (1) between the magnet-fixation holes (12) and the magnet slots (11) toward the magnet slots (11), the position of the magnets (2) can be fixed. In this process, there is no need to purchase and use equipment and molds for injection molding and nylon injection molding materials, so the production cost of motors can be reduced, and further the production cost of new energy vehicles can be reduced, thereby enhancing competitiveness of new energy vehicles.

## Description

### CROSS REFERENCING OF RELATED APPLICATIONS

This application claims priority from the Chinese utility model patent application No. 202320727127.8 filed with the Chinese Patent Office on April 4, 2023 and entitled "ROTOR CORE AND ROTOR", the content of which is hereby incorporated by reference in its entirety.

### TECHNICAL FIELD

The present utility model belongs to the technical field of motor rotor, and specifically relates to an rotor core and a rotor.

### BACKGROUND

With the rapid development of the new energy vehicle industry, the requirements for the key components of new energy vehicles, such as the drive motor and the generator, are gradually increasing. Affected by the overall cost of new energy vehicles, the demand for low-cost motors is becoming increasingly high.

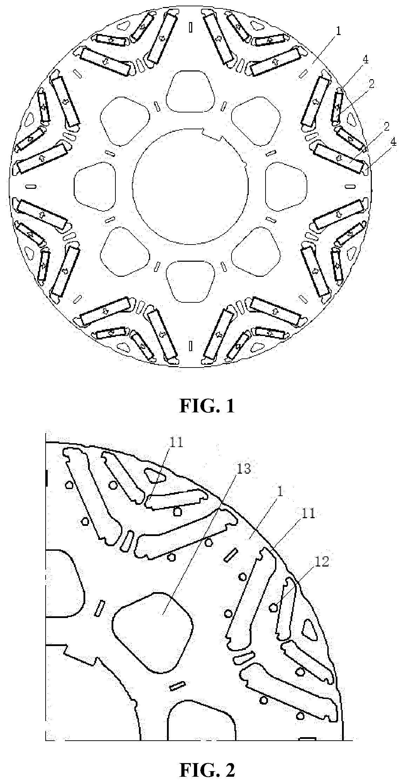

As shown in FIG. 1, in the conventional motors, the magnets 2 are fixed by injection molding. More specifically, the magnets 2 are fixed to the rotor laminations 1 by injection molding of a nylon injection plastic 4. However, the use of nylon injection plastics not only increases the production cost of motors, but also requires the purchase of additional equipment and molds for injection molding, thereby increasing the production cost of motors. Moreover, during the injection molding process, the small gap for injection molding between the magnets and the rotor laminations increases the difficulty of injection molding, and thus the amount of injection plastic wasted is much larger than the amount required for fixing the magnets, which further leads to an increase in production costs and affects the production costs of new energy vehicles, thereby reducing the market competitiveness of new energy vehicles and negatively affecting their sales.

### SUMMARY

With respect to the above problems, the present utility model discloses an rotor core and a rotor to overcome or at least partially solve the above problems.

To achieve the above object, the present utility model adopts the following technical solutions.

An aspect of the present utility model provides an rotor core comprising rotor laminations; the rotor laminations are provided with magnet slots and magnet-fixation holes, the magnet-fixation holes are located at a side of the magnet slots, and magnets are located inside the magnet slots; the magnet-fixation holes can be pushed and deformed toward the magnet slots to press tightly and fix the magnets.

Optionally, the magnet-fixation holes are located at one side of the magnet slots.

Optionally, the magnet-fixation holes are located at both sides of the magnet slots.

Optionally, the magnet-fixation holes are circular magnet-fixation holes or elliptical magnet-fixation holes.

Optionally, the magnet-fixation holes are through holes penetrating the rotor laminations.

Optionally, the magnet-fixation holes are are blind holes, and are located on one side face of the rotor laminations.

Optionally, the magnet-fixation holes are blind holes, and are located on both side faces of the rotor laminations.

Optionally, the rotor core further comprises tongues, the tongues are located on inner walls along a longitudinal direction of the magnet slots and connected with the inner walls, and the tongues abuts against the magnets.

Optionally, the tongues and the rotor laminations are integrally formed.

Another aspect of the present utility model provides a rotor comprising the above rotor core.

The advantages and beneficial effects of the present utility model are as follows.

In the rotor core and the rotor according to the present utility model, by providing the magnet-fixation holes at a side of the magnet slots, and pushing the rotor laminations between the magnet-fixation holes and the magnet slots toward the magnet slots, the position of the magnets can be pressed tightly and fixed in place. In this process, there is no need to use injection molding materials, so the production cost of motor can be reduced, and further the production cost of new energy vehicle can be reduced, thereby enhancing competitiveness of the new energy vehicle.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present utility model. Moreover, throughout the drawings, the same reference numerals are used to denote the same components. In the drawings:
FIG. 1 is a schematic diagram of the shape and structure of an rotor core in the prior art;
FIG. 2 is a schematic diagram of the positions of magnet-fixation holes and magnet slots before pushing the magnet-fixation holes in an rotor core according to an embodiment;
FIG. 3 is a schematic diagram of the positions of magnet-fixation holes and magnet slots after pushing the magnet-fixation holes in the rotor core according to the embodiment;
FIG. 4 is a schematic diagram of the position structure of the magnet-fixation holes penetrating the rotor laminations in the rotor core according to the embodiment;
FIG. 5 is a schematic diagram of the position structure of magnet-fixation holes located on one side face of rotor laminations in an rotor core according to another embodiment;
FIG. 6 is a schematic diagram of the position structure of magnet-fixation holes located on both side faces of rotor laminations in an rotor core according to yet another embodiment; and
FIG. 7 is a schematic diagram of the position structure of tongues and magnet-fixation holes in an rotor core according to an embodiment.

### DETAILED DESCRIPTION

In order to make the object, technical solutions, and advantages of the present utility model clearer, the present utility model will be described clearly and completely in conjunction with the specific embodiments and corresponding drawings. Obviously, the embodiments described are only part of rather than all of the embodiments of the present utility model. Based on the embodiments in the present utility model, all other embodiments obtained by a person of ordinary skill in the art without paying creative work shall fall within the protection scope of the present utility model.

It should be understood that the terms "comprise/include", "consist of' or any other variants are intended to cover non-exclusive inclusion, so that the product, apparatus, process or method including a series of elements may not only include those elements, but may also include other elements not stated explicitly, or elements inherent to the product, apparatus, process or method. Without more limitations, an element defined by the phrase "comprise/include" or "consist of" does not exclude the case that there are other same elements in the product, apparatus, process or method including the element.

It should also be understood that, orientation or positional relationship indicated by the terms "upper", "lower", "front", "rear", "left", "right", "top", "bottom", "inner", "outer", etc. are orientation or positional relationship based on the drawings, which are merely for convenience of describing the present utility model and simplifying the description, rather than indicating or implying that the device, component or structure referred to must have a specific orientation, or must be constructed and operated with a specific orientation, they should not be construed as limiting the present utility model.

The technical solutions provided by the embodiments of the present utility model will be described in detail below in conjunction with the accompanying drawings.

As shown in FIGS. 2 to 4 and 7, an embodiment of the present utility model provides an rotor core comprising rotor laminations 1. The rotor laminations 1 are provided with magnet slots 11 and magnet-fixation holes 12. The magnet-fixation holes 12 are located at one side of the magnet slots 11, and magnets are located inside the magnet slots 11. By pushing the magnet-fixation holes 12, the magnet-fixation holes 12 deforms and the rotor laminations 1 between the magnet-fixation holes 12 and the magnet slots 11 deforms toward the magnet slots 11, thereby pressing tightly and fix the magnets.

In the rotor core according to this embodiment, by providing the magnet-fixation holes at a side of the magnet slots and pushing and deforming the magnet-fixation holes toward the magnet slots, the rotor laminations between the magnet-fixation holes and the magnet slots can be driven to press tightly toward the magnet slots, thereby achieving the fixation of position of the magnets. In this process, there is no need to use injection molding materials, so the production cost of motor can be reduced, and further the production cost of new energy vehicle can be reduced, thereby enhancing competitiveness of the new energy vehicle.

In other embodiments, depending on the distance between adjacent magnet slots, the magnet-fixation holes may be located at both sides of the magnet slots, and by pushing the magnet-fixation holes toward the magnet slots, the effect of pressing and fixing the magnets can also be achieved.

In addition, in this embodiment, the magnet-fixation holes 12 are magnet-fixation holes with circular cross-section. Compared with square magnet-fixation holes, there is no corner at the edge of the circular fixing holes, so the circular fixing holes will not have stress concentration when subjected to a force, which can ensure the integrity of the rotor laminations, and thus achieve the effect of improving the performance of the motor.

In this case, a pry bar with elliptical cross-section can be used to push the rotor laminations 1 between the magnet-fixation holes 12 and the magnet slots 11, which can selectively push a weak position of the rotor laminations, thereby reducing the difficulty of pushing the rotor laminations.

In other embodiments, the magnet-fixation holes may also be elliptical magnet-fixation holes, which also have no corner at the edge, thereby avoiding the fracture of the magnet-fixation holes when subjected to a force, and thus ensuring the integrity of the rotor laminations. At this point, a circular pry bar can be used to selectively push the magnet-fixation holes, thereby achieving the effect of easy deformation of the magnet-fixation holes.

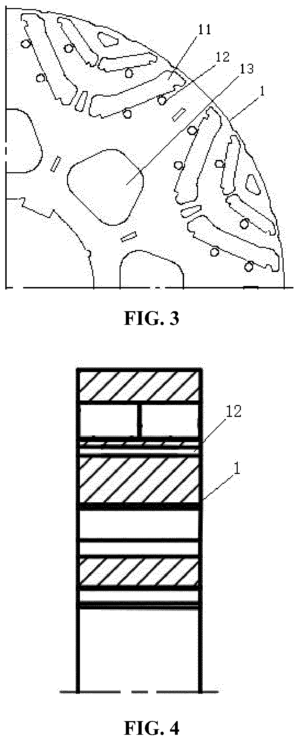

As shown in FIG. 4, in this embodiment, the magnet-fixation holes 12 are through holes penetrating the rotor laminations 1. In this way, the pushing area of the magnet-fixation holes can be increased, thereby increasing the contact area between the magnets and the magnet slots, and thus achieving the technical effect of improving the stability of the connection between the magnets and the magnet slots.

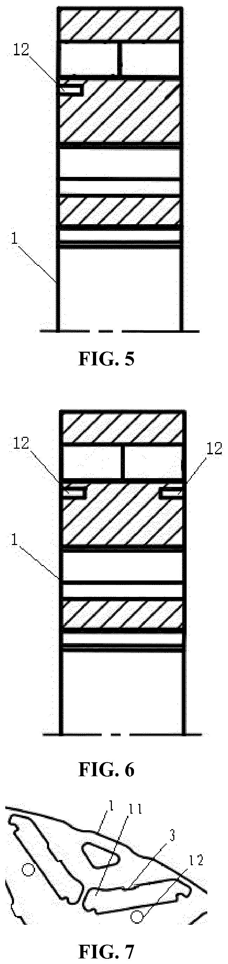

Of course, as shown in FIG. 5, in other embodiments, depending on the thickness of the rotor laminations, the magnet-fixation holes may also be blind holes. The magnet-fixation holes are located on one side face of the rotor laminations, and the stability of the connection between the magnets and the magnet slots can be improved by adjusting the length of the magnet-fixation holes.

Further, as shown in FIG. 6, in other embodiments, when the magnet-fixation holes are blind holes, the magnet-fixation holes may be located on both side faces of the rotor laminations, which can also increase the contact area between the magnets and the magnet slots, thereby enhancing the stability of the connection between the magnets and the magnet slots.

As shown in FIG. 7, in this embodiment, the rotor core further comprises tongues 3. The tongues 3 are located on inner walls of the magnet slots 11. By making the tongues abut against the magnets, the position of the magnets can be fixed, and the position stability of the magnets can be further improved.

Further, as shown in FIG. 7, in this embodiment, two inner walls are provided along the longitudinal direction of the magnet slots 11. One inner wall of the magnet slots 11 can be deformed by pushing the magnet-fixation holes 12, and the tongues 3 are located on the other inner wall of the magnet slots 11. In this way, the position of the magnets can be further fixed, thereby improving the position fixation stability of the magnets.

Preferably, the tongues 3 and the inner walls of the magnet slots 11 are integrally formed. Such rotor laminations can be stamped to directly form the tongues, thereby improving the convenience of processing the tongues.

As shown in FIGS. 2 and 3, preferably, the side face of the rotor laminations 1 are provided with weight reducing holes 13. By providing the weight reducing holes, the weight of the rotor laminations can be reduced, thereby reducing the weight of the motor and thus achieving the effect of reducing convey costs of the motor. Moreover, the rotor laminations with weight reducing holes can be directly made by stamping, which can form weight reducing holes without the need of additional cutting processes, thereby achieving the effect of reducing processing costs.

An embodiment of the present utility model also provides a rotor comprising the above rotor core.

The above are only implementations of the present utility model and are not intended to limit the scope of the present utility model. Any modifications, equivalent substitutions, improvements, extensions, etc. made within the spirit and principle of the present utility model should all fall into the protection scope of the present utility model.

## Claims

1. An rotor core, comprising: rotor laminations (1), **characterized in that**: the rotor laminations (1) are provided with magnet slots (11) and magnet-fixation holes (12), the magnet-fixation holes (12) are located at a side of the magnet slots (11), and magnets (2) are located inside the magnet slots (11); the magnet-fixation holes (12) can be pushed and deformed toward the magnet slots (11) to press tightly and fix the magnets (2).

2. The rotor core according to claim 1, **characterized in that**: the magnet-fixation holes (12) are located at one side of the magnet slots (11).

3. The rotor core according to claim 1, **characterized in that**: the magnet-fixation holes (12) are located at both sides of the magnet slots (11).

4. The rotor core according to claim 1, **characterized in that**: the magnet-fixation holes (12) are circular magnet-fixation holes (12) or elliptical magnet-fixation holes (12).

5. The rotor core according to any one of claims 1-4, **characterized in that**: the magnet-fixation holes (12) are through holes penetrating the rotor laminations (1).

6. The rotor core according to any one of claims 1-4, **characterized in that**: the magnet-fixation holes (12) are blind holes, and are located on one side face of the rotor laminations (1).

7. The rotor core according to any one of claims 1-4, **characterized in that**: the magnet-fixation holes (12) are blind holes, and are located on both end faces of the rotor laminations (1).

8. The rotor core according to any one of claims 1-4, further comprising tongues (3), **characterized in that**: the tongues (3) are located on inner walls along a longitudinal direction of the magnet slots (11) and connected with the inner walls, and the tongues (3) abut against the magnets (2).

9. The rotor core according to claim 8, **characterized in that**: the tongues (3) and the rotor laminations (1) are integrally formed.

10. A rotor comprising the rotor core according to any one of claims 1-9.
